## Europäisches Patentamt
## European Patent Office
## Office européen des brevets

(19)

(11) Veröffentlichungsnummer: **0 017 779**
**B1**

(12) # EUROPÄISCHE PATENTSCHRIFT

(45) Veröffentlichungstag der Patentschrift:
08.12.82

(51) Int. Cl.³: **B 25 J 3/00,** B 65 G 47/90,
B 23 Q 7/00

(21) Anmeldenummer: 80101430.9

(22) Anmeldetag: 19.03.80

(54) Druckmittelbetätigte Lineareinheit für Handhabungsgeräte der industriellen Fertigung.

(30) Priorität: 11.04.79 DE 2914650

(43) Veröffentlichungstag der Anmeldung:
29.10.80 Patentblatt 80/22

(45) Bekanntmachung des Hinweises auf die Patenterteilung:
08.12.82 Patentblatt 82/49

(84) Benannte Vertragsstaaten:
AT CH DE FR GB IT NL SE

(56) Entgegenhaltungen:
DE-A-2 032 874
DE-A-2 301 423
DE-A-2 632 748 ·
DE-B-2 341 532
DE-U-7 202 321
DE-U-7 910 366
FR-A-773 584
US-A-3 819 061
US-A-3 941 157
**TECHNISCHE RUNDSCHAU,**
Jahrgang 68, Nr. 2, 13. Januar 1976,
»Flexibles Handlingssystem in der Fertigung«,
Seiten 9 und 10

(73) Patentinhaber: **ROBERT BOSCH GMBH, Postfach 50,
D-7000 Stuttgart 1 (DE)**

(72) Erfinder: **Drexel, Peter, Plieningerstrasse 33,
D-7031 Steinenbronn (DE)**
Erfinder: **Maier, Gernot, Im Geiger 81,
D-7000 Stuttgart 50 (DE)**
Erfinder: **Leisner, Ernst, Wettertalstrasse 4,
D-7257 Ditzingen (DE)**

**WERKSTATTTECHNIK,
Band 65, Nr. 8, 1975,
»Montage- und Handhabungstechnik«,
Seiten 503 bis 509**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Druckmittelbetätigte Lineareinheit für Handhabungsgeräte der industriellen Fertigung

### Stand der Technik

Die Erfindung geht aus von einer druckmittelbetätigten Lineareinheit für Handhabungsgeräte nach der Gattung des Hauptanspruchs. Bei einer bekannten Lineareinheit (DE-A-2 301 423) sind in den mit Befestigungs- und Indexiermitteln versehenen Grundkörper zwei rohrförmige Zylinderkörper eingesetzt, in welche je eine als Plunger wirkende Kolbenstange eintaucht, deren anderes Ende mit einem Arbeitsflansch verbunden ist. Die Anordnung ist dabei so getroffen, daß die beiden Kolben-Zylindereinheiten alternativ mit Druckmittel beaufschlagt sind und gegensinnig wirken, wodurch die gewünschten Hin- und Herbewegungen des Arbeitsflansches erzielbar sind. Diese Anordnung ist verhältnismäßig aufwendig, weil sie zwei Kolben und zur Bildung der Arbeitszylinder zusätzliche Teile benötigt. Ferner sind bei dieser bekannten· Anordnung die beiden Arbeitsflansche zur Verdrehsicherung über zwei Führungsstangen miteinander verbunden, die ebenfalls in Zylinderbuchsen verschiebbar gelagert sind, welche im Grundkörper befestigt sind. Diese Art der Führung der Arbeitsflansche ist ebenfalls aufwendig und vergrößert die entsprechende Dimension des Geräts.

Bei einem anderen bekannten Handhabungsgerät (DE-A-2 032 874) ist zur Bildung des Arbeitszylinders ebenfalls ein in einen Grundkörper eingesetztes Teil vorgesehen, wobei unter Vertauschung der Rollen von Kolben und Arbeitszylinder der Kolben am Grundkörper festgehalten ist und der Arbeitszylinder das bewegliche Stellelement des Geräts bildet. Durch den Arbeitszylinder ist eine Druckmittel-Leitung für nachgeschaltete Geräteeinheiten hindurchgeführt. Zu diesem Zweck ist der Arbeitszylinder mit Längsbohrungen versehen, in welche Rohre teleskopartig hineinragen, die mit Zuführungsbohrungen an einem gehäusefesten Anschlußteil verbunden sind.

Ferner ist eine Lineareinheit mit zwei Arbeitszylindern bekannt (DE-A-2 632 748), bei welcher der Grundkörper und die Arbeitszylinder zu einem einheitlichen, prismatischen Gehäuseblock zusammengefaßt sind, der mit zwei durchgehenden und beidseitig durch Endflansche abgedeckten Zylinderbohrungen versehen ist. Bei dieser bekannten Lineareinheit ist der Gehäuseblock jedoch nicht mit durchgehenden Längsbohrungen zur Aufnahme von Energieübertragungselementen für weitere, nachgeschaltete Baugruppen versehen, so daß derartige Elemente frei um die Lineareinheit herumgeführt werden müssen und störend wirken.

### Vorteile der Erfindung

Die erfindungsgemäße Anordnung mit den kennzeichnenden Merkmalen des Hauptanspruchs hat demgegenüber den Vorteil, daß gesonderte Teile zur Bildung des bzw. der Arbeitszylinder entfallen, und daß sich insgesamt eine kompakte und störungsunempfindliche Baueinheit ergibt, in welcher sämtliche, für die Funktion des Gerätes notwendigen Bauteile bzw. Aggregate integrierbar sind. Das Gerät benötigt z. B. keine frei herumhängenden, den notwendigen Arbeitshub zu überbrückenden Energieversorgungsleitungen. Diese befinden sich lediglich, falls notwendig, an den Übergangsflanschen zur nächsten Baueinheit. Bei Verwendung von prismatischen, vorzugsweise quaderförmigen Gehäuseblöcken läßt sich die druckmittelbetätigte Lineareinheit im Baukastensystem verwenden. Besonders vorteilhaft ist weiter, daß sämtliche Versorgungsleitungen für das Druckmittel und/oder für elektrische Steuerteile innerhalb des Gehäuseblockes geschützt angeordnet werden können.

Weitere vorteilhafte Weiterbildungen der im Hauptanspruch angegebenen Lehre ergeben sich aus den Unteransprüchen und aus der nachfolgenden Beschreibung.

### Zeichnung

Ein Ausführungsbeispiel der Erfindung ist in der Zeichnung dargestellt und in der nachfolgenden Beschreibung näher erläutert. Es zeigt
Fig. 1 einen Längsschnitt der Lineareinheit,
Fig. 2 bis 4 Schnitte nach den Linien II-II bis IV-IV in Fig. 1.

### Beschreibung des Ausführungsbeispiels

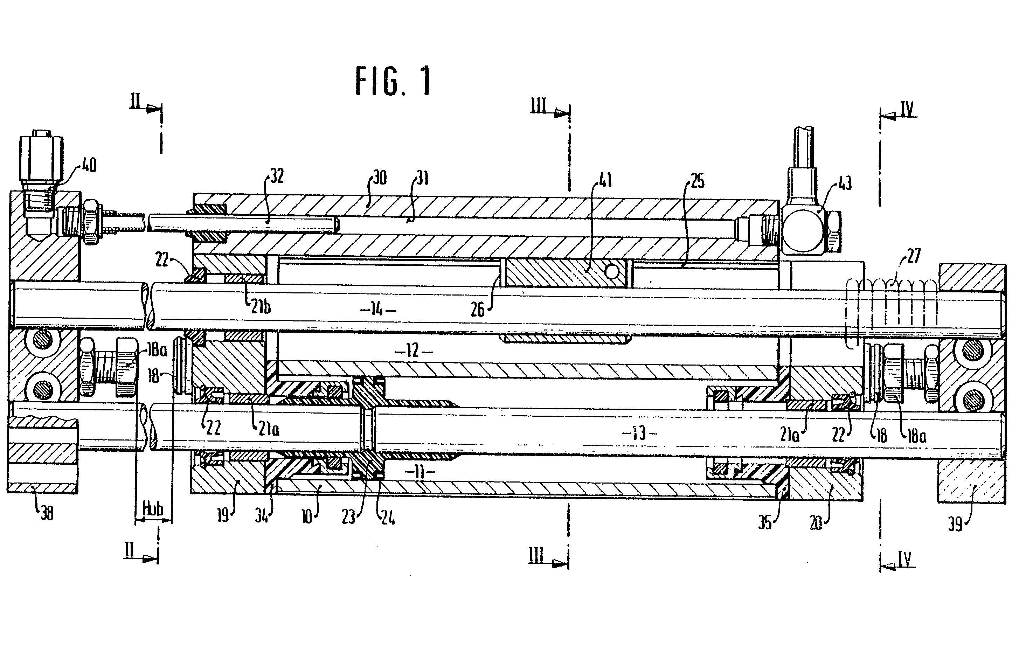

Die in Fig. 1 dargestellte Lineareinheit hat als Hauptbestandteil einen Gehäuseblock 10, in welchem eine Stellstange 13 und eine Führungsstange 14 verschiebbar gelagert sind. Für die Stellstange 13 ist ein Antrieb vorgesehen, welcher im vorliegenden Ausführungsbeispiel pneumatisch oder hydraulisch ausgebildet ist. Als wesentliche Bauteile sind schließlich noch Energieübertragungseinrichtungen zu nennen, die man unterteilen kann in innere Energieübertragungseinrichtungen sowie Energieübertragungseinrichtungen zur nächsten Baueinheit. Hierbei muß unterschieden werden zwischen der Steuerenergie (z. B. Endschalter) und der Leistungsenergie (z. B. Antrieb, Stellstange, Betätigung eines Greifmagneten).

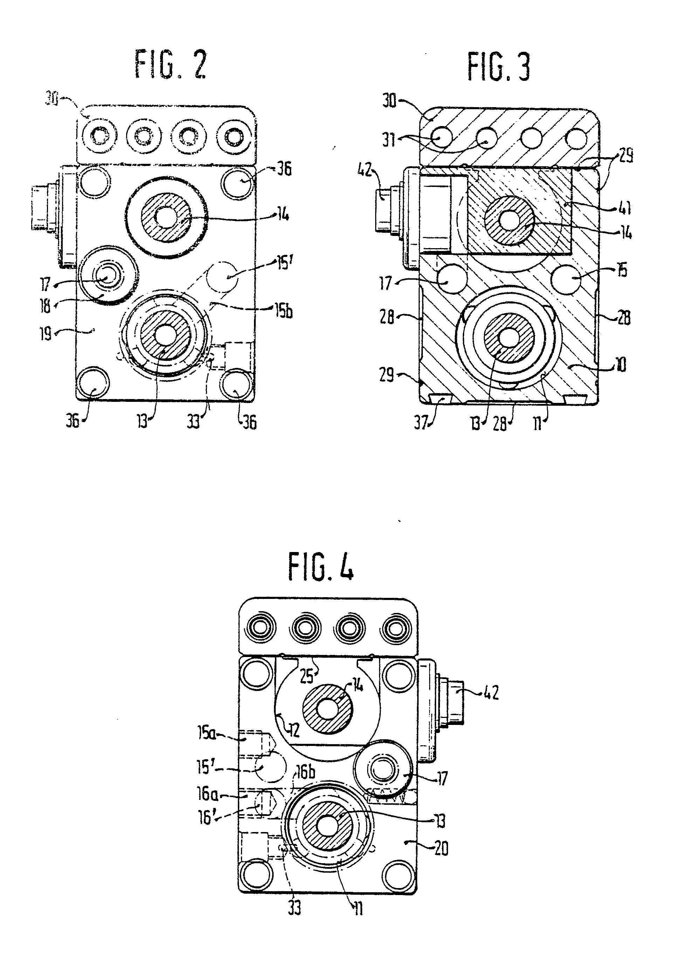

Der in den Figuren dargestellte Aufbau der Lineareinheit ist folgender: Wie insbesondere aus Fig. 3 ersichtlich, enthält der Gehäuseblock 10 im wesentlichen eine Zylinderbohrung 11 für die Stellstange 13 sowie eine weitere Bohrung 12 für die Führungsstange 14. Sowohl die Stellstange 13 als auch die Führungsstange 14 können als Hohlwelle ausgebildet sein, um hierdurch zusätzlich Raum für Leitungsführungen zur Energieübertragung zu schaffen. Die Bohrung 12 für die Führungsstange 14 ist nach einer Seite und in Längsrichtung des Gehäuses 10 hin mit einer Öffnung 25 versehen. Hierdurch wird eine bessere Zugänglichkeit zu den in dieser Bohrung verlaufenden elektrischen Leitungen, insbesondere zu einem elektrischen Kabel 27 erreicht.

In der Zylinderbohrung 11 ist ein auf der Stellstange 13 befestigter Kolben 23 verschiebbar gelagert, welcher pneumatisch oder hydraulisch angetrieben ist. Der Kolben 23 trägt ein Dichtelement 24, welches in der Zylinderbohrung 11 zwei Zylinderkammern voneinander abteilt.

Der Antrieb des Kolbens 23 in der Zylinderbohrung 11 erfolgt durch Beaufschlagung des Kolbens mit Druckmittel über einen Durchbruch 15b in einem Endflansch 19, einer Bohrung 15 im Gehäuseblock 10 und einem Außenanschluß 15a, 15' in einem Endflansch 20. In den Fig. 2 und 4 sind die hierfür notwendigen Endflansche 19 und 20 dargestellt. Fig. 4 zeigt den Schnitt IV-IV aus Fig. 1. Wie aus Fig. 4 ersichtlich, enthält der Endflansch 20 eine Bohrung 15', die mit der Bohrung 15 im Gehäuseblock 10 fluchtet. Weiterhin enthält der Endflansch 20 eine Bohrung 16', die einen Außenanschluß 16a mit der Zylinderbohrung 11 verbindet. Die durch den Gehäuseblock 10 hindurchgehende Bohrung 15 sowie die Bohrungen 15a, 15' und die Bohrungen 16', 16a, 16b in dem Endflansch 20 dienen der Zu- bzw. Abfuhr des Druckmittels zum Antrieb des Kolbens 23. Der Kolben 23 ist fest mit der Stellstange 13 verbunden, wodurch die Stellstange in der Zylinderbohrung 11 hin und her bewegbar ist. Eine in dem Endflansch 20 enthaltene Bohrung 33 (Drosselbohrung) dient zur Dämpfung des Kolbens 23 beim Erreichen seiner Endlage. Hierfür sind zwischen den Endflanschen 19, 20 weitere, schraffiert dargestellte Dämpfungsflansche 34, 35 vorgesehen. Die Durchbrüche 15b und 16b können auch in den Dämpfungsflanschen 34, 35 eingebracht sein.

In den Endflanschen 19, 20 sind Lager 21a, b sowie Dichtungen 22 zur Lagerung und Abdichtung der Stellstange 13 bzw. Führungsstange 14 vorgesehen. Dies gilt für die Führungsstange 14 nur für den Endflansch 19. Ein weiteres Lager für die Führungsstange 14 ist innerhalb der Aussparung 26 des Gehäuseblocks 10 vorgesehen. Diese ist erforderlich, weil in der Bohrung 12 für die Führungsstange 14 sich weitere Energieübertragungseinrichtungen befinden. Auf der Führungsstange 14 ist insbesondere das Kabel 27 spiralförmig aufgewickelt; dieses Kabel dient als Verbindungselement zur Steuerung der nachfolgenden Bau- bzw. Lineareinheit bzw. zur Verbindung der Lineareinheiten miteinander hinsichtlich der Steuerenergie. Die Lage der Aussparung 26 im Gehäuseblock 10 ist dementsprechend abhängig von der Blocklänge des zusammengeschobenen Kabels 27. Weiterhin enthält die Aussparung 26 einen Klemmkasten 41, in welchem die elektrischen Versorgungsleitungen zusammenlaufen und von welchem aus ein externer Anschluß 42 möglich ist.

Wie aus Fig. 2 bis 4 weiterhin ersichtlich, enthält der Gehäuseblock 10 eine weitere durchgehende Bohrung 17, die zur Aufnahme von elektrischen Leitungen dient und an deren Ende z. B. ein Steuerungsschalter, z. B. induktiver Endschalter 18 mit Anschlag 18a angeordnet sein kann. Die in den Fig. 2 bis 4 in den Ecken des Gehäuseblocks 10 eingezeichneten Bohrungen 36 dienen dem Zusammenbau der Lineareinheit.

Der Gehäuseblock 10 weist an seiner Mantelfläche flächenartige Aussparungen 28 auf. Diese sind sehr zweckmäßig, da beim Kalibrieren der Zylinderbohrung 11 eine Aufweitung des Gehäuseblocks 10 entstehen kann. Durch die Aussparungen 28 in der Mantelfläche des Gehäuseblocks 10 bleiben dessen übrige Flächen bezüglich ihrer Abmaße her genau definiert. Der Gehäuseblock 10 wird vorzugsweise im Strangpreßverfahren hergestellt.

Der Gehäuseblock 10 enthält an seiner Mantelfläche im Bereich der Ecken Längsrillen 29, welche sich über seine gesamte Länge erstrecken. Diese Längsrillen dienen als Markierung für später vorzunehmende Bohrungen, z. B. die Bohrungen 36, die sich in einer bestimmten Lage befinden sollen.

Wie in Fig. 3 nur schematisch dargestellt, enthält der Gehäuseblock 10 weiterhin T-förmige Nuten 37, die sich über seine gesamte Länge erstrecken und zur Befestigung sowie dem Anbau weiterer Lineareinheiten dienen.

Bei der Verwendung der Lineareinheit im Baukastensystem, d. h. zum Beispiel bei Aneinanderreihung mehrerer Lineareinheiten, ist es zweckmäßig, die Außenmaße der verschiedenen Baugrößen von Lineareinheiten aufeinander abzustimmen. So kann z. B. die Rechteckslänge der kleineren Lineareinheit gleich der Rechtecksbreite der nächstgrößeren Lineareinheit sein.

Als weitere Baueinheit ist dem Gehäuseblock 10 eine durch ein Strangpreßprofil gebildete Gehäuseplatte 30 zugeordnet, die der Druckmittelführung von einer Baueinheit zur anderen dient. Die Gehäuseplatte 30 ist hierfür mit mehreren abdichtbaren Längsbohrungen 31 versehen, aus welchen jeweils ein Rohr 32 teleskopartig ausziehbar ist. Durch die Gehäuseplatte 30, deren Längsbohrungen 31 auch einen prismatischen Querschnitt haben können, wird auf sehr vorteilhafte Weise die Energieversorgung der einzelnen Lineareinheiten untereinander ermöglicht. Auf einfache Weise wird die Halterung der notwendigen Leitungen, das Abdichtproblem der unter Druck stehenden Leitungen sowie das Anschlußproblem der Leitungen miteinander gelöst. Die Länge der in die Längsbohrungen 31 hineinragenden Rohre 32 ist an die Hublänge der Stellstange 13 angepaßt. Die Gehäuseplatte 30 ist auf den Gehäuseblock 10 aufgeschraubt.

An den Enden der Stellstange 13 sowie der Führungsstange 14 sind Arbeitsflansche 38, 39 befestigt, an denen weitere Bauteile bzw. weitere Lineareinheiten befestigt werden können. Die Arbeitsflansche 38, 39 können jedoch auch unmittelbar zum Positionieren bzw. Weiterschieben von Werkstücken dienen. Am Arbeitsflansch 38 sind die Rohre 32 und ein Anschluß 40 zur Energieversorgung der nächsten Lineareinheit befestigt. Die Energiezufuhr geschieht über einen Anschluß 43 an der Gehäuseplatte 30. Die Arbeitsflansche 38, 39 weisen weiterhin die Anschläge 18a für die Endschalter 18 an den Endflanschen 19, 20 zur Steuerung der Lineareinheit auf.

Die dargestellte Lineareinheit ist durch Zusammenflanschen zweier Baueinheiten, insbesondere im Bereich der Öffnung 25 des Gehäuseblocks 10, sehr leicht zu einer verstärkten Ausführung umrüstbar. Die Lineareinheit ist insbesondere zur Verwendung in einem Baukastensystem geeignet und bestimmt.

## Patentansprüche

1. Druckmittelbetätigte Lineareinheit für Handhabungsgeräte der industriellen Fertigung, mit einem Grundkörper, der einen Arbeitszylinder für einen Kolben (23) enthält, welcher über eine aus dem Zylinder und dem Grundkörper herausführende Stellstange (13) mit einem Arbeitsflansch (38 bzw. 39) verbunden ist, an welchem als Verdrehsicherung eine im Grundkörper parallel zur Stellstange (13) verschiebbar gelagerte Führungsstange (14) befestigt ist, wobei

a) der Grundkörper und der Arbeitszylinder zu einem einheitlichen Gehäuseblock (10) zusammengefaßt sind, der vorzugsweise eine prismatische Gestalt hat und der ferner mit einer durchgehenden Zylinderbohrung (11) für den beidseitig mit Druckmittel beaufschlagten Kolben (23) und mit einer Längsbohrung (12) zur Aufnahme der Führungsstange (14) versehen ist,

b) der Gehäuseblock (10) ferner mit mindestens zwei weiteren Längsbohrungen (15, 17) versehen ist, von denen eine (15) zur Energieversorgung des Arbeitszylinders und eine andere (17) zur Aufnahme von Energieübertragungselementen, insbesondere elektrischen Kabels, dient,

c) an den beiden Stirnenden des Gehäuseblocks (10) Endflansche (19, 20) angebracht sind, welche den Arbeitszylinder beidseitig dicht abschließen und die Stellstange (13) sowie mindestens das eine Ende der Führungsstange (14) verschiebbar lagern, und von denen der eine Endflansch (20) die nebeneinanderliegenden Anschlüsse (15a, 16a) für die Energieversorgung des Arbeitszylinders trägt.

2. Lineareinheit nach Anspruch 1, dadurch gekennzeichnet, daß an den Endflanschen (19, 20) Endschalter (18) befestigt sind, die mit entsprechend angeordneten Betätigungsgliedern (18a) an dem bzw. den Arbeitsflanschen (38, 39) zusammenarbeiten.

3. Lineareinheit nach Anspruch 1 oder 2, dadurch gekennzeichnet, daß der Gehäuseblock (10) im Bereich der die Führungsstange (14) aufnehmenden Bohrung (12) in Längsrichtung eine Öffnung (25) aufweist.

4. Lineareinheit nach einem der Ansprüche 1 bis 3, dadurch gekennzeichnet, daß der Gehäuseblock (10) im Bereich der die Führungsstange (14) aufnehmenden Bohrung (12) mit einer Aussparung (26) zur Aufnahme eines elektrischen Klemmenkastens (41) mit Anschlußbuchse (42) und/oder eines zusätzlichen Lagers für die Führungsstange (14), versehen ist.

5. Lineareinheit nach Anspruch 4, dadurch gekennzeichnet, daß die Aussparung (26) mit Klemmenkasten (41) den Endpunkt eines um die Führungsstange (14) gewickelten Kabels (27) für die Energieversorgung zur nächsten Baueinheit bildet.

6. Lineareinheit nach einen oder mehreren der vorhergehenden Ansprüche, dadurch gekennzeichnet, daß der Gehäuseblock (10) an der Mantelfläche nach innen versetzte Aussparungen (28) hat.

7. Lineareinheit nach einem der vorhergehenden Ansprüche, dadurch gekennzeichnet, daß der Gehäuseblock (10) mit Längsrillen (29) versehen ist.

8. Lineareinheit nach einem der vorhergehenden Ansprüche, dadurch gekennzeichnet, daß der Gehäuseblock (10) mit T-förmigen und/oder schwalbenschwanzförmigen Nuten (37) zur Befestigung versehen ist.

9. Lineareinheit nach einem der vorhergenannten Ansprüche, dadurch gekennzeichnet, daß die Außenmaße des Gehäuseblocks (10) auf die Außenmaße der nächstgrößeren Lineareinheit abgestimmt sind.

10. Lineareinheit nach einem der vorhergehenden Ansprüche, dadurch gekennzeichnet, daß der Gehäuseblock (10) im Strangpreßverfahren hergestellt ist.

11. Lineareinheit nach einem der vorhergehenden Ansprüche, dadurch gekennzeichnet, daß auf den Gehäuseblock (10) eine Gehäuseplatte (30) aufgesetzt ist, durch welche Druckmittel-Leitungen (31, 32) für nachgeschaltete Baueinheiten hindurchgeführt sind.

12. Lineareinheit nach Anspruch 11, dadurch gekennzeichnet, daß die Druckmittel-Leitungen über Längsbohrungen (31) in der Gehäuseplatte (30) führen, in welche Rohre (32) teleskopartig hineinragen, die am Arbeitsflansch (38) befestigt und dort mit weiterführenden Anschlüssen (40) verbunden sind.

## Claims

1. A pressure medium actuated linear module for industrial handling apparatus, comprising a base member which includes a working cylinder for a piston (23) which is connected through an adjusting rod (13) extending out of the cylinder and of the base member to a working flange (38 or 39) to which is fixed as a security against rotation a guide rod (14) displaceably mounted in the base member parallel to the adjusting rod (13), wherein

a)  the base member and the working cylinder are combined into one unitary housing block (10) which preferably has a prismatic shape and which is further provided with a cylinder bore (11) passing through it for the piston (23) influenced at both ends by the pressure medium and with a longitudinal bore (12) for the reception of the guide rod (14),

b)  the housing block (10) is further provided with at least two further longitudinal bores (15, 17) one of which (15) serves for the supply of energy to the working cylinder and another of which (17) serves for the reception of energy transmitting elements, especially electric cables,

c)  end flanges (19, 20) are provided at both ends of the housing block (10) and which sealingly close the working cylinder at both ends and displaceably mount the adjusting rod (13) as well as at least one end of the guide rod (14) and one end flange (20) of which carries the adjacent unions (15a, 16a) for the energy supply to the working cylinder.

2. A linear module according to claim 1, characterised in that, limit switches (18) are fixed to the end flanges (19, 20) and co-operate with correspondingly arranged actuating members (18a) on the working flange or flanges (38, 39).

3. A linear module according to claim 1 or 2, characterised in that, the housing block (10) has a longitudinal opening (25) in the region of the bore (12) accommodating the guide rod (14).

4. A linear module according to one of claims 1 to 3, characterised in that, in the region of the bore (12) accommodating the guide rod (14), the housing block (10) is provided with a recess (26) for the reception of an electrical terminal box (41) provided with a connecting socket (42) and/or an additional bearing for the guide rod (14).

5. A linear module according to claim 4, characterised in that, the recess (26) together with the terminal box (41) forms the end point of a cable (27) wound around the guide rod (14) for the energy supply to the next module.

6. A linear module according to one or more of the preceding claims, characterised in that, the housing block (10) has inwardly directed recesses (28) in its outer surface.

7. A linear module according to one of the preceding claims, characterised in that, the housing block (10) is provided with longitudinal grooves (29).

8. A linear module according to one of the preceding claims, characterised in that, the housing block (10) is provided with T-shaped and/or dovetailed grooves (37) for fixing.

9. A linear module according to one of the preceding claims, characterised in that, the external dimension of the housing block (10) is matched to the external dimension of the next largest linear module.

10. A linear module according to one of the preceding claims, characterised in that, the housing block (10) is produced by an extrusion moulding process.

11. A linear module according to one of the preceding claims, characterised in that, a housing plate (20) through which pass pressure medium lines (31, 32) for subsequent modules, is mounted on the housing block (10).

12. A linear module according to claim 11, characterised in that, the pressure medium lines lead through longitudinal bores (31) in the housing plate (30) into which tubes (32) project telescopically which are fixed to the working flange (38) and at that location are connected to further unions (40) leading elsewhere.

## Revendications

1. Unité linéaire actionnée par fluide sous pression pour engins de manoeuvre industriels, comprenant un corps de base avec un cylindre de travail pour un piston (23) qui est relié, par l'intermédiaire d'une tige de manoeuvre (13) sortant du cylindre et du corps de base, à une bride de travail (38, 39) sur laquelle est fixée, en tant que sécurité contre la rotation, une tige de guidage (14) montée pour coulisser dans le corps de base parallèlement à la tige de manoeuvre (13), dans laquelle:

a)  le corps de base et le cylindre de travail sont réunis en un bloc de carter unitaire (10), ayant de préférence une forme prismatique et muni en outre d'un alésage cylindrique traversant (11) pour le piston (23) pouvant être sollicité par le fluide sous pression sur ses deux faces et d'un alésage longitudinal (12) pour recevoir la tige de guidage (14),

b)  le bloc de carter (10) est en outre muni d'au moins deux autres alésages longitudinaux (15, 17), parmi lesquels l'un (15) sert à l'alimentation en énergie du cylindre de travail et un autre (17) sert au logement d'éléments de transmission d'énergie, notamment de câbles électriques,

c)  sur les deux extrémités frontales du bloc de carter (10) sont disposées des brides d'extrémité (19, 20) qui ferment le cylindre de travail de façon étanche des deux côtés et qui assurent le montage coulissant de la tige de manoeuvre (13) ainsi que d'au moins l'une des extrémités de la tige de guidage (14), l'une (20) de ces brides d'extrémité portant les raccords (15a, 16a) placés l'un à côté de l'autre pour l'alimentation en énergie du cylindre de travail.

2. Unité linéaire selon revendication 1, caractérisée en ce que, sur les brides d'extrémité (19, 20), sont fixés des interrupteurs de fin de course (18) coopérant avec des organes de manoeuvre (18a) disposés en conséquence sur la ou les brides de travail (38, 39).

3. Unité linéaire selon revendication 1 ou 2, caractérisée en ce que le bloc de carter (10) présente, en direction longitudinale une ouverture (25) dans le domaine de l'alésage (12) recevant la tige de guidage (14).

4. Unité linéaire selon l'une des revendications 1 à 3, caractérisée en ce que le bloc de carter (10) est muni, dans le domaine de l'alésage (12) recevant la tige de guidage (14), d'un évidement (26) pour le logement d'un coffret électrique à bornes (41) avec une douille de connexion (42) et/ou un palier supplémentaire pour la tige de guidage (14).

5. Unité linéaire selon revendication 4, caractérisée en ce que l'évidement (26) avec le coffret à bornes (41) constitue le point d'aboutissement d'un câble (27) enroulé autour de la tige de guidage (14) et destiné à l'alimentation en énergie vers l'unité de construction suivante.

6. Unité linéaire selon l'une ou plusieurs des revendications précédentes, caractérisée en ce que le bloc de carter (10) présente des évidements (28) décalés vers l'intérieur sur la surface latérale.

7. Unité linéaire selon l'une des revendications précédentes, caractérisée en ce que le bloc de carter (10) est muni de rainures longitudinales (29).

8. Unité linéaire selon l'une des revendications précédentes, caractérisée en ce que le bloc de carter (10) est muni, pour la fixation, de rainures (37) en forme de T et/ou en forme de queue d'aronde.

9. Unité linéaire selon l'une des revendications précédentes, caractérisée en ce que les cotes extérieures du bloc de carter (10) sont accordées sur les cotes extérieures de l'unité linéaire immédiatement plus grande.

10. Unité linéaire selon l'une des revendications précédentes, caractérisée en ce que le bloc de carter (10) est fabriqué par le procédé de filage à la presse.

11. Unité linéaire selon l'une des revendications précédentes, caractérisée en ce que, sur le bloc de carter (10), est appliquée une plaque de carter (30) à travers laquelle sont guidées des conduites de fluide sous pression (31, 32) pour les unités de construction branchées à la suite.

12. Unité linéaire selon revendication 11, caractérisée en ce que les conduites de fluide sous pression passent à travers des perçages longitudinaux (31) prévus dans la plaque de carter (30), dans laquelle pénètrent de façon télescopique des tubes (32) fixés sur la bride de travail (38) et reliés en cet emplacement à des raccords de prolongement (40).

# FIG. 1

## FIG. 2

## FIG. 3

## FIG. 4